# DEMANDE DE BREVET EUROPEEN

(11) **EP 0 722 786 A1**
(43) Date de publication de la demande: **24.07.1996**
(21) Numéro de dépôt: 96400112.7
(22) Date de dépôt: 17.01.1996
(51) Int. Cl.: B05D 5/08, A47J 36/02, C23C 4/02

(54) **Procédé pour permettre l'accrochage sur une surface en aluminium d'un revêtement en matière dure et récipients culinaires ainsi traités**

(30) Priorité: 18.01.1995 FR 9500525
(71) Demandeur: SEB S.A., F-69130 Ecully (FR)
(72) Inventeur: Brasset, Jean-François, F-74960 Cran Gevrier (FR)
(74) Mandataire: Keib, Gérard

(57) **Abrégé**

Avant de projeter à chaud sur la surface (1) en aluminium ou alliage d'aluminium un revêtement en matière dure (5), on soumet cette surface à une attaque acide ayant pour effet de créer sur cette surface des microcavités (3) . Ces microcavités (3) améliorent l'accrochage d'un revêtement en matière dure (5) qui sert lui-même de base pour un revêtement en matière anti-adhésive (7).

## Description

La présente invention concerne un procédé pour permettre l'accrochage sur une surface en aluminium ou en alliage d'aluminium, d'un revêtement en matière dure, métallique ou céramique projeté à chaud sur ladite surface.

L'invention vise également les récipients culinaires ayant été traités conformément au procédé selon l'invention.

On connaît des récipients culinaires dont la surface intérieure est recouverte d'un revêtement appelé "base dure" en métal ou en céramique. Une telle base dure est elle même recouverte par un revêtement anti-adhésif par exemple en polytétrafluoréthylène. Cette base dure améliore la tenue mécanique du revêtement anti-adhésif et remédie ainsi à l'inconvénient constitué par le fait que l'aluminium est relativement mou.

L'application de cette base dure est réalisée par projection thermique. Dans le cas d'une base dure en métal, le métal est projeté sous forme de gouttelettes en fusion, celles-ci provenant d'un fil chauffé à la flamme, par un arc électrique, ou sous forme de poudre chauffée à la flamme ou sous forme de plasma ou projetées à une vitesse supersonique.

Dans le cas d'une base dure en céramique, on utilise une poudre ou un cordon qui est traitée soit à la flamme soit au plasma.

Avant d'appliquer la base dure ci-dessus par projection, la surface de l'aluminium est sablée ou grenaillée pour la rendre adhérente. Cette opération est délicate, car la matière abrasive doit être choisie et projetée selon un réglage très précis et afin d'engendrer une certaine rugosité, pour éviter tout risque d'incrustation de particule abrasive dans l'aluminium qui aurait pour effet de réduire les forces d'accrochage du revêtement ultérieur. De plus, les temps de sablage sont souvent longs.

Le but de la présente invention est de remédier aux inconvénients ci-dessus.

L'invention vise ainsi un procédé pour permettre l'accrochage sur une surface en aluminium ou en alliage d'aluminium d'un revêtement en matière dure métallique ou céramique projeté à chaud sur ladite surface.

Suivant l'invention, ce procédé est caractérisé en ce que ladite surface est soumise, avant projection à chaud dudit revêtement, à une attaque chimique au moyen d'un acide capable de créer des microcavités d'accrochage sur ladite surface.

On a constaté de façon surprenante que le procédé ci-dessus utilisant une attaque chimique remédiait parfaitement aux inconvénients du sablage ou du grenaillage et de plus, permettait d'obtenir un excellent accrochage du revêtement en matière dure.

Depuis plus de quarante ans, on traite par attaque acide, les disques en aluminium pour permettre l'accrochage d'un revêtement de polytétrafluoréthylène, destinés à être emboutis sous forme de récipients culinaires.

Cet accrochage résulte du fait que l'attaque acide crée dans l'aluminium, au niveau des points de grains, des microcavités de formes particulières dans lesquelles peuvent pénétrer les fines particules de polytétrafluoréthylène qui sont projetées sur l'aluminium sous forme de dispersion aqueuse.

L'homme du métier n'avait aucune raison de penser qu'une telle attaque acide était appropriée pour obtenir l'accrochage d'une base dure appliquée par projection à chaud, compte tenu de la nature différente de la matière projetée.

En effet, dans le cas du polytétrafluoréthylène la matière est projetée à froid sous forme de particules solides dispersées dans l'eau.

Dans le cas d'une base dure, la matière est projetée sous forme de gouttelettes en fusion. Rien ne permettait à l'homme du métier de penser que la forme et les dimensions des microcavités seraient appropriées pour permettre la pénétration des gouttelettes en fusion qui est nécessaire pour l'accrochage de la base dure.

D'autres particularités et avantages de l'invention résulteront encore de la description ci-après.

Aux dessins annexés, donnés à titre d'exemples non limitatifs ;
- la figure 1 est un schéma, illustrant l'attaque acide d'un disque en aluminium,
- la figure 2 est une vue en coupe partielle à échelle agrandie du disque montrant les cavités obtenues après l'attaque acide,
- la figure 3 est un schéma illustrant la projection sur le disque de la matière en fusion pour réaliser le revêtement en matière dure,
- la figure 4 est une vue en coupe partielle à échelle agrandie du disque montrant le revêtement en matière dure et le revêtement anti-adhésif appliqué sur cette dernière.

Le procédé décrit ci-après concerne la fabrication d'un récipient culinaire en aluminium dont l'intérieur est revêtu d'une couche de base en matière dure et d'une ou plusieurs couches en matière antiadhésive.

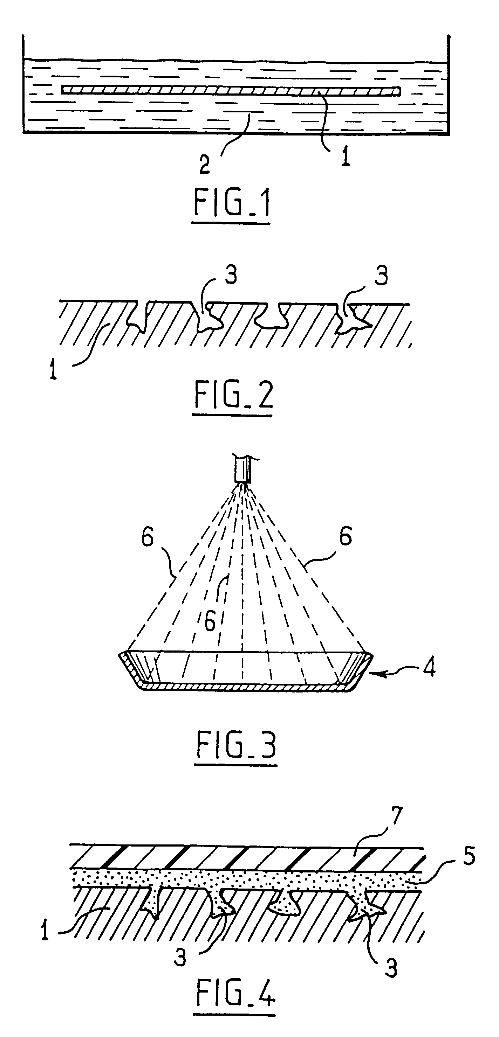

Dans la première étape illustrée par la figure 1, un disque 1 en aluminium ou alliage d'aluminium est soumis à une attaque dans un bain d'acide 2.

Cet acide crée sur la surface du disque 1 des microcavités 3 (voir figure 2). L'acide utilisé est de préférence l'acide chlorhydrique dilué à raison de 30 à 60g par litre d'eau. La durée de l'attaque est de 3 à 6 minutes.

Après rinçage, on projette à chaud sur la surface intérieure du disque 2 embouti sous forme de récipient de cuisson 4, un revêtement en matière dure 5, par exemple en métal tel que l'acier inoxydable ou en céramique telle que l'alumine additionnée de 3 % d'oxyde de titane.

La technique de projection utilisée est bien connue en elle-même et correspond à celle exposée dans l'introduction de la présente description.

La matière dure est projetée sur la surface comprenant les microcavités 3 sous forme de fines gouttelettes 6 qui remplissent les microcavités 3 et forment une couche 5 qui après refroidissement devient dure.

Cette dernière est solidement ancrée à la surface du disque 1 embouti, grâce aux microcavités 3 créées lors de l'attaque acide.

On peut ensuite appliquer sur la couche dure 5, une ou plusieurs couches de matière anti-adhésive 7, comme indiqué sur la figure 4. Cette matière anti-adhésive est de préférence du polytétrafluoréthylène.

Bien entendu, l'invention n'est pas limitée aux exemples que l'on vient de décrire et on peut apporter à ceux-ci de nombreuses modifications sans sortir du cadre de l'invention.

## Revendications

1. Procédé pour permettre l'accrochage sur une surface (1) en aluminium ou en alliage d'aluminium d'un revêtement en matière dure (5) métallique ou céramique projetée à chaud sur ladite surface, caractérisé en ce que ladite surface (1) est soumise, avant projection à chaud dudit revêtement , à une attaque chimique (2) au moyen d'un acide capable de créer des microcavités d'accrochage (3) sur ladite surface (1) et en ce que l'on applique sur ledit revêtement dur (5), une ou plusieurs couches d'une matière anti-adhésive (7).

2. Procédé conforme à la revendication 1, caractérisé en ce que ladite attaque chimique (2) est réalisée au moyen d'acide chlorhydrique.

3. Procédé conforme à la revendication 2, caractérisé en ce que l'acide chlorhydrique est dilué à raison de 30 à 60 g par litre d'eau.

4. Procédé conforme à l'une des revendications 1 à 3, caractérisé en ce que l'on projette à chaud sur ladite surface (1) ayant été soumise à l'attaque acide, un revêtement (5) à base d'alumine et d'oxyde de titane.

5. Procédé conforme à l'une des revendications 1 à 3, caractérisé en ce que l'on projette à chaud sur ladite surface (1) ayant été soumise à l'attaque acide, un revêtement en acier inoxydable.

6. Procédé conforme à l'une des revendications 1 à 5, caractérisé en ce que ladite matière anti-adhésive (7) est du polytétrafluoréthylène.

7. Récipient culinaire (4) en aluminium ou en alliage d'aluminium, caractérisé en ce que sa surface intérieure et/ou extérieure a été traitée selon le procédé conforme à l'une des revendications 1 à 6.
